(19) **Europäisches Patentamt / European Patent Office / Office européen des brevets**

(11) **EP 2 098 438 A1**

(12) **EUROPEAN PATENT APPLICATION**
published in accordance with Art. 153(4) EPC

(43) Date of publication:
**09.09.2009 Bulletin 2009/37**

(21) Application number: **07860054.1**

(22) Date of filing: **25.12.2007**

(51) Int Cl.:
*B62D 6/00* *(2006.01)*
*B60T 8/171* *(2006.01)*
*B60W 40/10* *(2006.01)*
*G01P 15/16* *(2006.01)*
*B62D 103/00* *(2006.01)*
*B62D 119/00* *(2006.01)*
*B60R 16/02* *(2006.01)*
*B60W 30/00* *(2006.01)*
*B62D 5/04* *(2006.01)*
*B62D 101/00* *(2006.01)*
*B62D 113/00* *(2006.01)*

(86) International application number:
**PCT/JP2007/074825**

(87) International publication number:
**WO 2008/081776 (10.07.2008 Gazette 2008/28)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **26.12.2006 JP 2006349681**

(71) Applicant: **JTEKT Corporation**
**Osaka-shi**
**Osaka 542-8502 (JP)**

(72) Inventor: **SUZUKI, Hiroshi**
**Osaka-shi**
**Osaka 542-8502 (JP)**

(74) Representative: **TBK-Patent**
**Bavariaring 4-6**
**80336 München (DE)**

(54) **ACCELERATION COMPUTING DEVICE AND ELECTRIC POWER STEERING DEVICE**

(57) Wheel speed sensors FRs and FLs for detecting original wheel speed of a right front wheel FR and a left front wheel FL of drive wheels and wheel speed sensors RRs and RLs for detecting original wheel speed of a right rear wheel RR and a left rear wheel RL of driven wheels are included. If it is determined that ABS control is in operation, vehicle speed Vspd is calculated based on the wheel speed of the maximum speed of the wheel speed of all wheels (FR, FL, RR, and RL) (post-regulated wheel speed V1fr, Vlfl, V1rr, and V1rl). If it is determined that ABS control is not in operation, the vehicle speed Vspd is calculated based on the wheel speed of the maximum speed of the wheel speed of the driven wheels (RR and RL) (post-regulated wheel speed V1rr and V1rl). Longitudinal acceleration Gs of the vehicle is computed based on the vehicle speed Vspd computed in such a manner.

*FIG. 4*

EP 2 098 438 A1

**Description**

Technical Field

This invention relates to an acceleration computing apparatus and an electric power steering apparatus for computing acceleration in a longitudinal direction of a vehicle having an anti-lock controller.

Background Art

Hitherto, a vehicle longitudinal acceleration estimation apparatus, for example, disclosed in Japanese Patent Laid-Open 10-104259 has been known as an apparatus for estimating acceleration in a longitudinal direction of a vehicle (which will be hereinafter referred to also as "longitudinal acceleration"). The vehicle longitudinal acceleration estimation apparatus includes an acceleration sensor for detecting the longitudinal acceleration of the vehicle and filters a predetermined frequency component from the acceleration detection value detected by the acceleration sensor, thereby improving the estimation accuracy of the longitudinal acceleration. The longitudinal acceleration thus estimated is fed back to drive control for controlling the vehicle speed in response to the road state and the running state and assisting steering, for example, whereby the vehicle can be accelerated and decelerated with accuracy and with a good feeling.

Disclosure of the Invention

Problems to be Solved by the Invention

Meanwhile, such an acceleration sensor is expensive and is not installed in all vehicles. Then, it is possible to estimate the longitudinal acceleration by differentiating the vehicle speed calculated by an ECU on the brake side, for example, without using any acceleration sensor.

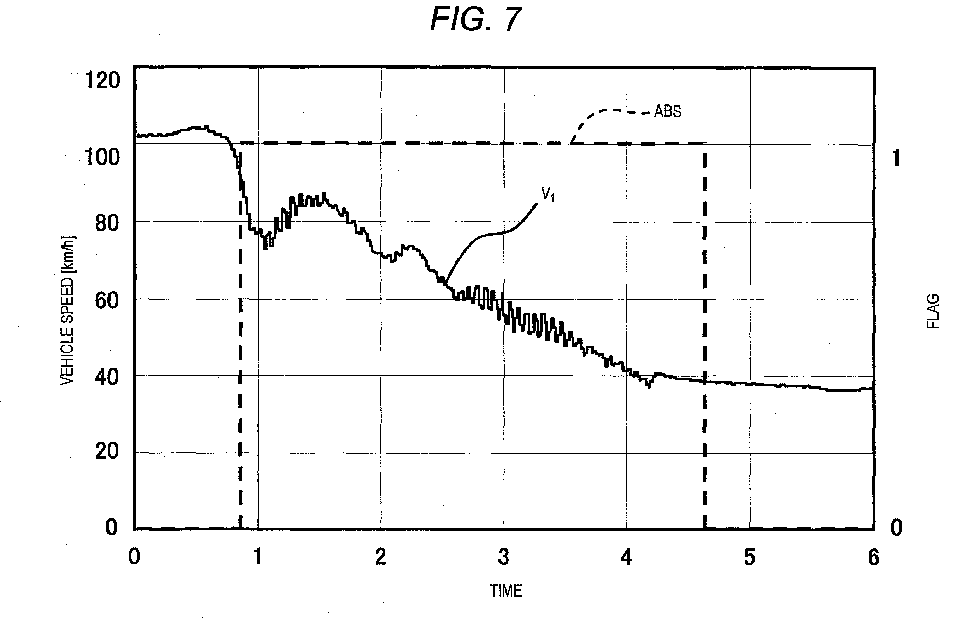

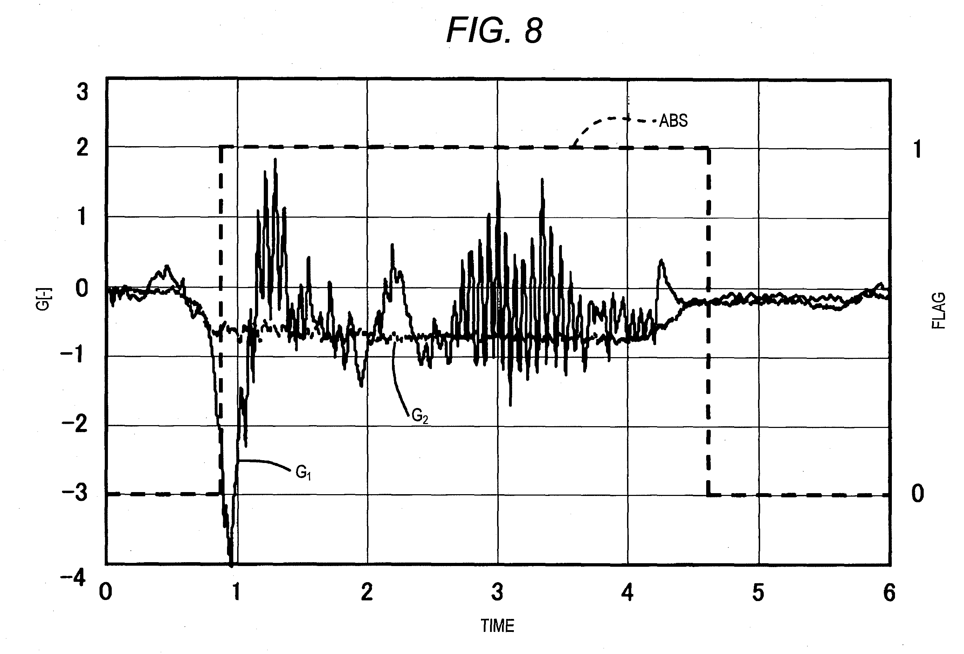

However, while an anti-lock controller is in operation, each wheel of the vehicle repeats a brake state and a non-brake state and thus vehicle speed $V_1$ calculated by the ECU on the brake side changes quickly as shown in FIG. 7. ABS indicated by the heavy dashed line in FIGs. 7 and 8 described later indicates whether or not the anti-lock controller is in operation; when a flag is 1, it indicates that the anti-lock controller is in operation; when the flag is 0, it indicates that the anti-lock controller is not in operation.

Thus, if an attempt is made to estimate the longitudinal acceleration by differentiating the vehicle speed $V_1$ quickly changing as described above, noise is superposed on the longitudinal acceleration as shown in FIG. 8 and there is a problem in that malfunction such that although the vehicle is decelerated, it is determined that the vehicle is accelerated can occur. $G_1$ indicated by the solid line in FIG. 8 indicates the time progress before and after ABS control, of the longitudinal acceleration provided by differentiating the vehicle speed $V_1$ in FIG. 7 and $G_2$ indicated by the dashed line indicates the time progress before and after ABS control, of the actual longitudinal acceleration provided using an acceleration sensor.

The invention is embodied for solving the problems described above and it is an object of the invention to provide an acceleration computing apparatus and an electric power steering apparatus that can precisely compute the acceleration in the longitudinal direction of the vehicle without using any acceleration sensor.

Means For Solving the Problems

To accomplish the object, an acceleration computing apparatus of a first aspect of the invention is an acceleration computing apparatus for computing the acceleration in the longitudinal direction of a vehicle based on the vehicle speed of the vehicle having an anti-lock controller and has the technical features in that it includes wheel speed acquisition means for acquiring wheel speed in a plurality of drive wheels and a plurality of driven wheels of the vehicle; determination means for determining whether or not the anti-lock controller is in operation; and vehicle speed computing means for computing the vehicle speed based on the wheel speed of the maximum speed of the wheel speed of the plurality of drive wheels and the plurality of driven wheels if the determination means determines that the anti-lock controller is in operation and computing the vehicle speed based on the wheel speed of the maximum speed of the wheel speed of the plurality of driven wheels if the determination means determines that the anti-lock controller is not in operation.

The acceleration computing apparatus of a second aspect of the invention has the technical features in that the acceleration computing apparatus of the first aspect includes wheel speed difference computing means for computing a wheel speed difference by subtracting the previously computed wheel speed from the currently acquired wheel speed and post-regulated wheel speed setting means, if the wheel speed difference is on the acceleration side from a first speed difference, for setting wheel speed resulting from adding the first speed difference to the previously computed wheel speed as post-regulated wheel speed, if the wheel speed difference is on the deceleration side from a second speed difference, for setting wheel speed resulting from adding the second speed difference to the previously computed wheel speed as post-regulated wheel speed, and if the wheel speed difference is the same as the first speed difference or is the same as the second speed difference or is on the deceleration side from the first speed difference and is on the acceleration side from the second speed difference, for setting the currently acquired wheel speed as post-regulated wheel speed, wherein the vehicle speed computing means computes the vehicle speed based on the post-regulated wheel speed instead of the wheel speed.

The acceleration computing apparatus of a third aspect of the invention has the technical features in that the acceleration computing apparatus of the first or second aspect includes filter means, if the anti-lock controller is in operation, for also removing a frequency component lower than a frequency component removed when the anti-lock controller is not in operation from the acceleration.

An electric power steering apparatus of a fourth aspect of the invention is an electric power steering apparatus for driving and controlling an assist motor based on the steering state of a steering wheel and controlling the steering angle of a steering wheel by drive power of the assist motor or making up for the drive power and has the technical features in that it controls the assist motor based on the acceleration computed by the acceleration computing apparatus described in any one of the first to third aspects.

Advantages of the Invention

In the first aspect, if it is determined that the anti-lock controller is in operation, the vehicle speed is calculated based on the wheel speed of the maximum speed of the wheel speed of the plurality of drive wheels and the plurality of driven wheels and if it is determined that the anti-lock controller is not in operation, the vehicle speed is calculated based on the wheel speed of the maximum speed of the wheel speed of the plurality of driven wheels; the acceleration in the longitudinal direction of the vehicle (longitudinal acceleration) is computed based on the vehicle speed computed in such a manner.

According to the configuration described above, if the anti-lock controller is in operation, wheel spin of the drive wheel does not occur and simultaneous lock of all wheels does not occur either and thus the vehicle speed is computed based on the wheel speed of the maximum speed of the wheel speed of the drive and driven wheels. The reason why the vehicle speed is thus calculated based on the wheel speed of the maximum speed is that the vehicle speed computed based on the wheel speed of the maximum speed is close to the actual vehicle speed as compared with the vehicle speed computed based on any other wheel speed.

On the other hand, the wheel speed of the drive wheel is detected as a very high value in a situation in which wheel spin of the drive wheel occurs if the anti-lock controller is not in operation. If the vehicle speed is estimated from the wheel speed of the drive wheel, it becomes clearly a too larger value than the actual vehicle speed. Then, if the anti-lock controller is not in operation, the wheel speed of the drive wheel involving a possibility of wheel spin is excluded and the vehicle speed is computed based on the wheel speed of the maximum speed of the wheel speed of the driven wheel involving a less possibility of wheel spin.

The vehicle speed provided as described above is calculated based on the wheel speed of the wheels and thus does not suddenly change even if the anti-lock controller is in operation. Thus, if the longitudinal acceleration is computed by differentiating the vehicle speed, the effect of noise caused by control of the anti-lock controller is not reflected on the longitudinal acceleration. Therefore, the acceleration in the longitudinal direction of the vehicle (longitudinal acceleration) can be precisely computed without using any acceleration sensor.

In the second aspect, if the wheel speed difference found by subtracting the previously computed post-regulated wheel speed from the currently acquired original wheel speed is on the acceleration side from the first speed difference, the wheel speed resulting from adding the first speed difference to the previously computed wheel speed is set as post-regulated wheel speed. If the wheel speed difference is on the deceleration side from the second speed difference, the wheel speed resulting from adding the second speed difference to the previously computed wheel speed is set as post-regulated wheel speed. If the wheel speed difference is the same as the first speed difference or is the same as the second speed difference or is on the deceleration side from the first speed difference and is on the acceleration side from the second speed difference, the currently acquired wheel speed is set as the post-regulated wheel speed. The vehicle speed is computed based on the post-regulated wheel speed.

Thus, data of the wheel speed such that the wheel speed difference becomes the acceleration side from the first speed difference is excluded and data of the wheel speed such that the wheel speed difference becomes the deceleration side from the second speed difference is excluded, whereby data of wheel speed that cannot occur in speed change of the actual vehicle can be excluded. Therefore, the acceleration in the longitudinal direction of the vehicle (longitudinal acceleration) can be precisely computed without using any acceleration sensor.

In the third aspect, if the anti-lock controller is in operation, a frequency component lower than a frequency component removed when the anti-lock controller is not in operation is also removed through the filter means from the acceleration.

While the anti-lock controller is in operation, the vehicle surely is braking and thus the fluctuating width of the longitudinal acceleration of the actual vehicle lessens as compared with the case where the anti-lock controller is not in operation.

Thus, if the anti-lock controller is in operation, the frequency component lower than that when the anti-lock controller is not in operation is also removed from the longitudinal acceleration, so that the longitudinal acceleration with more suppressed noise caused by the high frequency component can be calculated. Therefore, the acceleration in the longitudinal direction of the vehicle (longitudinal acceleration) can be precisely computed without using any acceleration sensor.

In the fourth aspect, the assist motor is driven and controlled for controlling the steering angle of the steering wheel based on the acceleration of the vehicle (longitudinal acceleration) computed by the acceleration computing apparatus described in any one of the first to third aspects. Accordingly, an electric power steering apparatus enjoying the above-described advantages provided by the invention as claimed in claims 1 to 3 such that the effect of noise caused by the anti-lock controller is not reflected on the longitudinal acceleration can be realized. Therefore, the electric power steering apparatus that can precisely compute the acceleration in the longitudinal direction of the vehicle (longitudinal acceleration) without using any acceleration sensor can be provided.

Brief Description of the Drawings

FIG. 1 is a drawing to show the configuration of an electric power steering apparatus according to an embodiment of the invention.
FIG. 2 is a flowchart to show processing of attitude stabilization control at braking time executed by an EPS-ECU shown in FIG. 1.
FIG. 3 is a flowchart to show a part of a subroutine of longitudinal acceleration computing processing in FIG. 2.
FIG. 4 is a flowchart to show a part of the subroutine of the longitudinal acceleration computing processing in FIG. 2.
FIG. 5 is a drawing to show the relationship between deflection of a vehicle attitude and a self-aligning torque at the braking time.
FIG. 6 is a drawing to show the time progress before and after ABS control, of longitudinal acceleration provided by applying the invention and actual acceleration.
FIG. 7 is a drawing to show the time progress before and after ABS control, of conventional vehicle speed.
FIG. 8 is a drawing to show the time progress before and after ABS control, of longitudinal acceleration provided by differentiating the vehicle speed in FIG. 7 and actual acceleration.

Best Mode for Carrying out the Invention

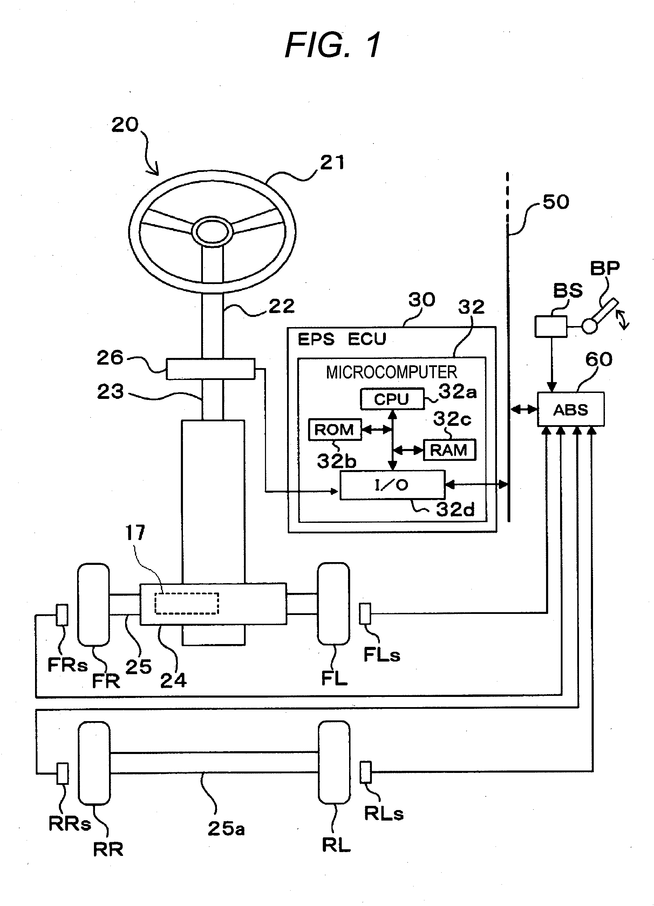

An embodiment of the invention will be described with reference to the accompanying drawings. In the embodiment, an example of applying an acceleration computing apparatus of the invention to an electric power steering apparatus (EPS) installed in a vehicle is described. To begin with, the configuration of an electric power steering apparatus 20 according to the embodiment will be discussed based on FIG. 1.

As shown in FIG. 1, the electric power steering apparatus 20 includes a steering wheel 21, a steering shaft 22, a pinion shaft 23, an EPS actuator 24, a rod 25, a torque sensor 26, an EPS electronic control unit (EPS-ECU) 30, an in-vehicle network (CAN: Controller Area Network) 50, an anti-lock controller (ABS) 60, wheel speed sensors FRs, FLs, RRs, and RLs, a brake pedal BP, a brake pedal sensor BS, etc. The brake pedal sensor BS and the wheel speed sensors FRs, FLs, RRs, and RLs are connected to the ABS 60, and the EPS-ECU 30 and the ABS 60 are connected to each other through the CAN 50.

As shown in FIG. 1, one end of the steering shaft 22 is connected to the steering wheel 21 and input of the torque sensor 26 is connected to an opposite end of the steering shaft 22. One end of the pinion shaft 23 is connected to output of the torque sensor 26.

The torque sensor 26 includes a torsion bar not shown in the figure and two resolvers attached to both ends of the torsion bar so as to sandwich the torsion bar and detects the twist amount, etc., of the torsion bar occurring between input as one end of the torsion bar and output as an opposite end by the two resolvers, thereby detecting steering torque τ and steering angle θs. The torque sensor 26 generates a detection signal corresponding to the steering torque τ and the steering angle θs to the EPS-ECU 30.

Input of the EPS actuator 24 is connected to an opposite end of the pinion shaft 23 and the EPS actuator 24 converts rotational motion input from the pinion shaft 23 into axial motion of the rod 25 by a rack and pinion gear, etc., and outputs the axial motion and also generates assist power responsive to the steering state by an assist motor 27 controlled by the EPS-ECU 30. The steering angle of a right front wheel FR and a left front wheel FL of steering wheels is made variable by the axial motion of the rod 25 and the traveling direction of the vehicle is changed.

The right front wheel FR is attached to the right end part of the rod 25 and the left front wheel FL is attached to the left end part of the rod 25. A right rear wheel RR is attached to the right end part of a rear wheel axis 25a and a left rear wheel RL is attached to the left end part of the rear wheel axis 25a. The vehicle in the embodiment is front wheel drive; hereinafter, the right front wheel FR and the left front wheel FL will be referred to also as drive wheels or steering wheels and the right rear wheel RR and the left rear wheel RL will be referred to also as driven wheels.

The wheel speed sensor FRs detects original wheel speed (rotation speed) Vfr of the right front wheel FR, the wheel speed sensor FLs detects original wheel speed Vfl of the left front wheel LR, the wheel speed sensor RRs detects original wheel speed Vrr of the right rear wheel RR, and the wheel speed sensor RLs detects original wheel speed Vrl of the left rear wheel LR. The wheel speed sensors FRs, FLs, RRs, and RLs generate detection signals corresponding to the original wheel speed Vfr, Vfl, Vrr, and Vrl and output the signals to the ABS 60.

When a driver presses the brake pedal BP, the brake pedal sensor BS detects the press amount of the brake pedal BP, generates a detection signal (brake signal Sbk) corresponding to the press amount, and outputs the signal to the ABS 60.

The ABS 60 outputs the detection signals of the wheel speed sensors FRs, FLs, RRs, and RLs and ABS signal Sabs to the CAN 50. The ABS 60 determines lock for each of the wheels FR, RR, FL, and RL, generates a drive signal for performing drive control of a braking device (not shown) provided for each wheel based on the determination result, and outputs the drive signal to each braking device. Thus, the braking force of each braking device is separately appropriately adjusted and it is made possible to prevent side slip, etc., caused by lock of each wheel and provide a stable braking force.

As shown in FIG. 1, the EPS-ECU 30 includes a microcomputer (which will be hereinafter referred to as "micom" in abbreviated form) 32, which contains a central processing unit (CPU) 32a, read-only memory (ROM) 32b, random access memory (RAM) 32c, an input/output unit (I/O) 32d, etc., and a computer system is configured. The torque sensor 26 is connected to the I/O 32d and the ABS 60, etc., is also connected through the CAN 50.

The EPS-ECU 30 controls the operation of the EPS actuator 24 to generate the assist power responsive to vehicle speed Vspd (described later) and the steering torque $\tau$, specifically to generate the larger assist power as the vehicle speed Vspd is smaller and (the absolute value of) the steering torque $\tau$ is larger. The EPS-ECU 30 forms an acceleration computing apparatus based on the detection signals of the wheel speed sensors FRs, FLs, RRs, and RLs and the ABS signal Sabc.

(Attitude stabilization control at braking time)

At the vehicle braking time, particularly at the sudden braking time, or at the running road a low-$\mu$ road of a falling gradient, etc., the vehicle attitude may deflect with respect to the vehicle straight-ahead direction because of deviation of the weight balance or the braking force or the like although the steering angle is constant, for example, straight-ahead braking is applied. In such a case, a self-aligning torque (SAT) to turn the steering wheel in the opposite direction to the vehicle deflection direction acts on the steering wheel.

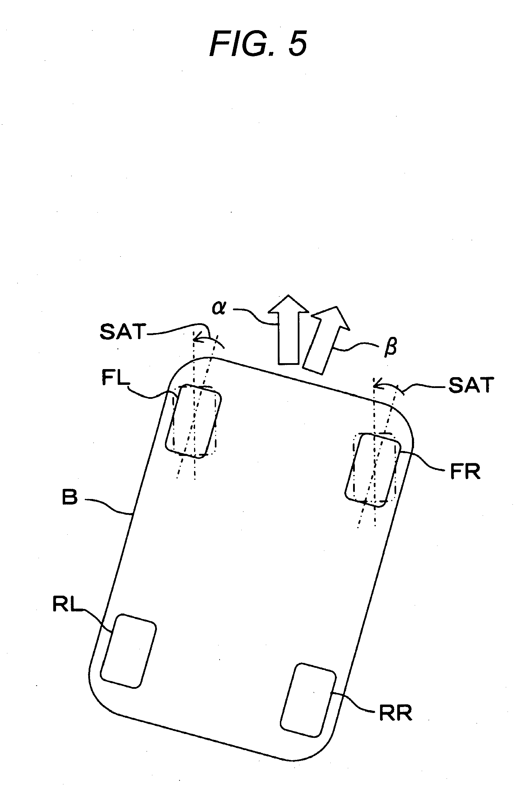

That is, if a vehicle B deflects in the arrow $\beta$ direction (vehicle deflection direction) as shown in FIG. 5, for example, the self-aligning torque in the direction of turning front wheels FR and FL in the arrow $\alpha$ direction (vehicle straight-ahead direction), namely, in the direction of stabilizing the vehicle direction acts on the right front wheel FR and the left front wheel FL of the steering wheels.

However, at the time, if the driver suppresses rotation of the steering wheel 21 occurring based on the self-aligning torque by maintaining the steering angle, the torque sensor 26 detects a steering torque in the vehicle deflection direction (arrow $\beta$ direction) based on twist of the torsion bar produced accordingly.

Thus, if the driver maintains the steering angle as described above, the EPS actuator 24 operates based on the steering torque detected by the torque sensor 26, whereby assist power is given in the direction of canceling the self-aligning torque acting in the vehicle stabilizing direction (arrow $\alpha$ direction) and consequently the vehicle flows in the vehicle deflection direction (arrow $\beta$ direction); this is a problem.

Considering this point, in the embodiment, at the barking time, the EPS-ECU 30 determines whether or not the braking is sudden braking and whether or not deflection occurs in the vehicle attitude. If it is determined that the braking is sudden braking and it is determined that deflection occurs in the vehicle attitude, the operation of the EPS actuator 24 is controlled to decrease the assist power to be given to the steering system (attitude stabilization control at braking time).

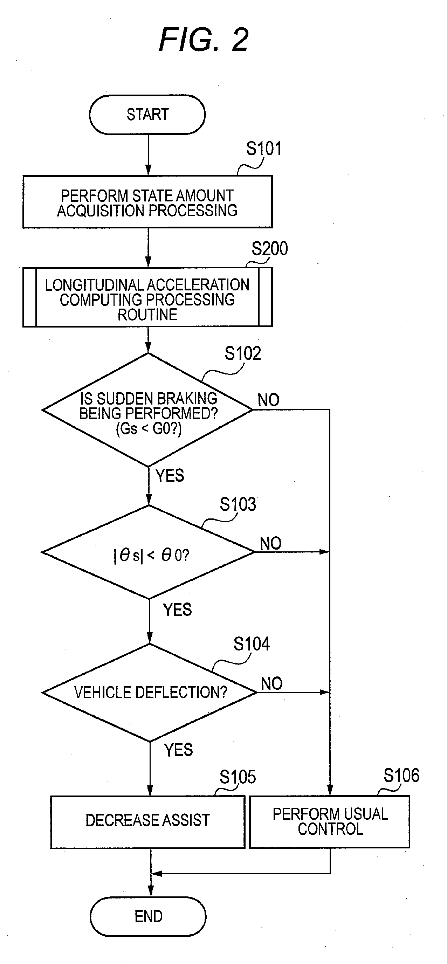

Subsequently, processing of attitude stabilization control at braking time in the EPS-ECU 30 of the electric power steering apparatus 20 thus configured will be discussed based on flowcharts of FIGs. 2 to 4.

As shown in FIG. 2, first, at step S101, state amount acquisition processing is performed. In this processing, the state amounts used for the attitude stabilization control at braking time, specifically the ABS signal Sabs indicating the presence or absence of ABS control as well as the steering angle θs, the steering torque $\tau$, and the original wheel speed Vfr, Vfl, Vrr, and Vrl of the wheels is acquired. The processing at step S101 corresponds to "wheel speed acquisition means" as claimed in Claims.

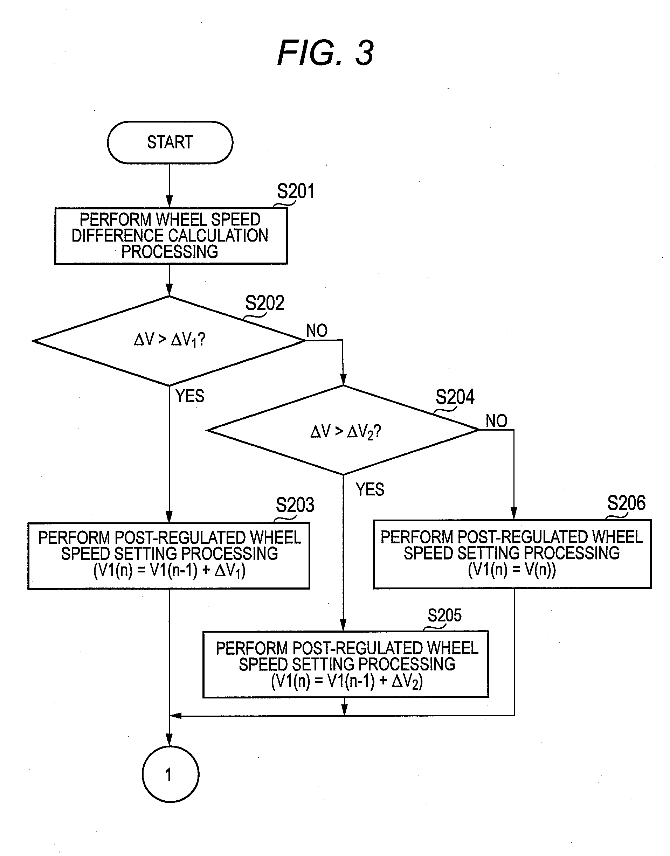

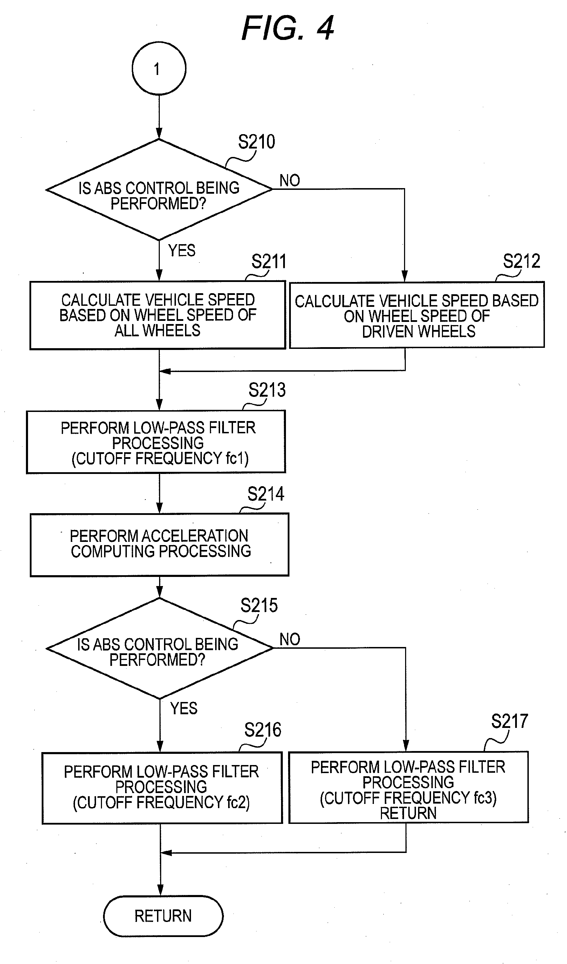

Next, longitudinal acceleration Gs is computed as described below according to a longitudinal acceleration computing processing routine S200 shown in FIGs. 3 and 4. First, at step S201 in FIG. 3, wheel speed difference calculation processing is performed for the original wheel speed. In this processing, previously computed post-regulated wheel speed (V1fr, V1fl, V1rr, V1rl) is subtracted from the original wheel speed Vfr, Vfl, Vrr, Vrl acquired at step S101 to compute wheel speed difference $\Delta V$. Hereinafter, the previously computed post-regulated wheel speed will be referred to also as $V1(n-1)$ and the currently computed original wheel speed will be referred to also as $V(n)$. The processing at step S201 corresponds to "wheel speed difference computing means" as claimed in Claims.

Next, at step S202, it is determined whether or not the wheel speed difference $\Delta V$ is larger than first speed difference $\Delta V_1$. If it is determined that the wheel speed difference $\Delta V$ is larger than the first speed difference $\Delta V_1$, namely, if it is determined that the wheel speed difference $\Delta V$ is on the acceleration side from the first speed difference $\Delta V_1$ (YES at S202), the process goes to step S203 and wheel speed resulting from adding the first speed difference $\Delta V_1$ to the previously computed post-regulated wheel speed $V_1(n-1)$ is set as post-regulated wheel speed $V1(n)$ as shown in the following expression (1):

$$V1(n) = V1(n\text{-}1) + \Delta V_1 \qquad (1)$$

On the other hand, if it is not determined that the wheel speed difference $\Delta V$ is larger than the first speed difference $\Delta V_1$ (NO at S202), the process goes to step S204 and it is determined whether or not the wheel speed difference $\Delta V$ is smaller than second speed difference $\Delta V_2$. If it is determined that the wheel speed difference $\Delta V$ is smaller than the second speed difference $\Delta V_2$, namely, if it is determined that the wheel speed difference $\Delta V$ is on the deceleration side from the second speed difference $\Delta V_2$ (YES at S204), the process goes to step S205 and wheel speed resulting from adding the second speed difference $\Delta V_2$ to the previously computed post-regulated wheel speed $V1(n-1)$ is set as post-regulated wheel speed $V1(n)$ as shown in the following expression (2):

$$V1(n) = V1(n\text{-}1) + \Delta V_2 \qquad (2)$$

On the other hand, if it is not determined that the wheel speed difference $\Delta V$ is smaller than the second speed difference $\Delta V_2$ (NO at S204), the process goes to step S206 and currently acquired original wheel speed $V(n)$ is set as post-regulated wheel speed $V1(n)$ intact as shown in the following expression (3):

$$V1(n) = V(n) \qquad (3)$$

Accordingly, data of wheel speed that cannot occur in speed change of the actual vehicle is excluded. In the embodiment, for example, the first speed difference $\Delta V_1$ is set to a speed difference corresponding to acceleration side acceleration 0.6 G and the second speed difference $\Delta V_2$ is set to a speed difference corresponding to deceleration side acceleration -1.2 G. Processing at steps S203, S205, and S206 corresponds to "post-regulated wheel speed setting means" as claimed in Claims.

Subsequently, at step S210 in FIG. 4, it is determined whether or not ABS control is in operation. If it is determined that ABS control is in operation according to the ABS signal (flag = 1) (YES at S210), the process goes to step S211 and the vehicle speed Vspd is calculated based on the wheel speed of the maximum speed of the post-regulated wheel speed V1fr, V1fl, V1rr, and V1rl of all wheels.

On the other hand, if it is determined that ABS control is not in operation according to the ABS signal (flag = 0) (NO at S210), the process goes to step S212 and the vehicle speed Vspd is calculated based on the wheel speed of the maximum speed of the post-regulated wheel speed V1rr and V1rl of the driven wheels. The determination processing at step S210 and step S215 described later corresponds to "determination means" as claimed in Claims. The calculation processing at either step S211 or step S212 corresponds to "vehicle speed computing means" as claimed in Claims.

When the vehicle speed Vspd is calculated at step S211 or step S212, subsequently at step S213, a frequency component higher than a cutoff frequency fc1 is removed from the vehicle speed Vspd.

Subsequently at step S214, acceleration computing processing is performed. In this processing, the longitudinal acceleration Gs, which is the acceleration in the longitudinal direction of the vehicle, is computed by differentiating the vehicle speed Vspd from which the high frequency component is removed at step S213.

Next, at step S215, it is determined whether or not ABS control is in operation. If it is determined that ABS control is in operation according to the ABS signal (YES at S215), the process goes to step S216 and a frequency component higher than a cutoff frequency fc2 is removed from the longitudinal acceleration Gs provided at step S214.

On the other hand, if it is determined that ABS control is not in operation according to the ABS signal (NO at S215), the process goes to step S217 and a frequency component higher than a cutoff frequency fc3 is removed from the longitudinal acceleration Gs provided at step S214. The processing at either step S216 or step S217 corresponds to "filter means" as claimed in Claims.

In the embodiment, if ABS control is in operation, the cutoff frequency fc2 is set to a value smaller than the cutoff frequency fc3 so as to remove the frequency component lower than that when ABS control is not in operation from the longitudinal acceleration Gs, namely, the high frequency component in a wider range from the longitudinal acceleration Gs. Specifically, for example, the cutoff frequency fc2 is set to 1 Hz and the cutoff frequency fc3 is set to 3 Hz.

Upon completion of the processing at either step S216 or step S217 as described above, the processing of the longitudinal acceleration computing processing routine S200 is exited and the process returns to FIG. 2 and goes to step S102.

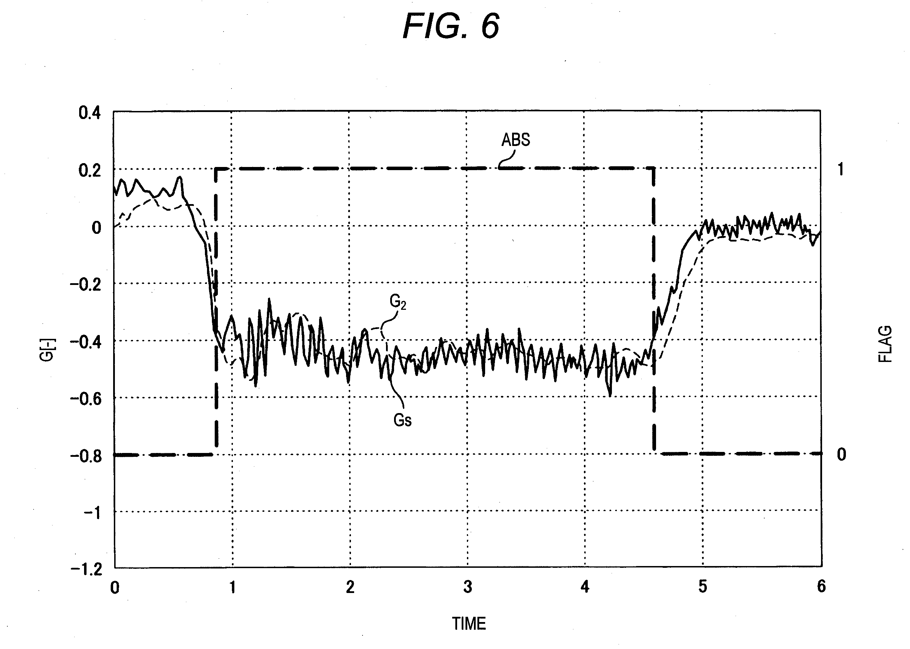

The time progress before and after ABS control, of the longitudinal acceleration Gs computed in the embodiment and the actual acceleration will be discussed with FIG. 6. Gs indicated by the solid line in FIG. 6 indicates the longitudinal acceleration Gs computed in the embodiment, and $G_2$ indicated by the dashed line indicates the actual longitudinal acceleration provided using an acceleration sensor. ABS indicated by the heavy dashed line indicates whether or not ABS control is in operation; when the flag is 1, it indicates that the ABS control is in operation; when the flag is 0, it indicates that the ABS control is not in operation.

As seen in FIG. 6, the longitudinal acceleration Gs computed by applying the invention is similar to the actual longitudinal acceleration $G_2$ provided using the acceleration sensor rather than the conventional longitudinal acceleration $G_1$ described above (see FIG. 8). That is, the longitudinal acceleration Gs can be precisely computed without using any acceleration sensor.

When the longitudinal acceleration Gs is computed by the longitudinal acceleration computing processing routine S200 as described above, subsequently at step S102 in FIG. 2, it is determined whether or not sudden braking is being performed. Here, if the computed longitudinal acceleration Gs is smaller than predetermined deceleration $G_0$ ($G_0$ is, for example, -0.6 G), it is determined that sudden braking is being performed (YES at S102) and the process goes to step S103 and it is determined whether or not the absolute value of the steering angle θs is smaller than a predetermined threshold value $θ_0$.

Here, if the absolute value of the steering angle θs is smaller than the predetermined threshold value $θ_0$, in other words, is within a predetermined angle range in the proximity of steering neutral, namely, if it is determined that the state is sudden braking from the roughly straight-ahead state (YES at S103), the process goes step S104 and it is determined whether or not deflection occurs in the vehicle attitude.

Here, if it is determined that deflection occurs in the vehicle attitude based on the steering angle θs and the vehicle speed Vspd (YES at S104), control for decreasing the assist power generated by the EPS actuator 24 is executed (step S105).

If the determination condition at any of steps S102 to S104 is not satisfied, namely, if it is determined that sudden braking is not being performed (NO at S102), if it is determined that the absolute value of the steering angle θs is equal to or greater than the predetermined threshold value $θ_0$ (NO at S103), or if it is determined that deflection does not occur in the vehicle attitude (NO at S104), the EPS-ECU 30 does not execute the assist decreasing processing at step S105. It performs usual control, namely, controls the operation of the EPS actuator 24 to generate the assist power responsive to the steering torque τ and the vehicle speed Vspd (step S106).

Thus, in the electric power steering apparatus 20 according to the embodiment, the EPS-ECU 30 determines whether or not sudden braking is being performed, whether or not straight-ahead braking is being performed, and whether or not deflection occurs in the vehicle attitude based on the longitudinal acceleration Gs of the vehicle, the vehicle speed Vspd, the steering angle θs, and the like. If it is determined that straight-ahead sudden braking is being performed and if it is determined that deflection occurs in the vehicle attitude, the operation of the EPS actuator 24 is controlled to decrease the assist power to be given to the steering system. According to the configuration described above, at the vehicle deflection time, the self-aligning torque acting in the vehicle stabilizing direction can be used effectively. Consequently, braking in a state in which a more stable vehicle attitude is maintained is made possible according to the simple configuration.

As shown in FIG. 4, in the electric power steering apparatus 20 according to the embodiment, if it is determined that ABS control is in operation according to the signals of the wheel speed sensors FRs, FLs, RRs, and RLs and the ABS signal Sabc received via the CAN 50, the vehicle speed Vspd is calculated based on the wheel speed of the maximum speed of the wheel speed of all wheels FR, FL, RR, and RL (post-regulated wheel speed V1fr, V1fl, V1rr, and V1rl) and if it is determined that ABS control is not in operation, the vehicle speed Vspd is calculated based on the wheel speed of the maximum speed of the wheel speed of the driven wheels RR and RL (post-regulated wheel speed V1rr and V1rl). The EPS-ECU 30 computes the longitudinal acceleration Gs of the vehicle based on the vehicle speed Vspd thus computed.

According to the configuration, if ABS control is in operation, wheel spin of the drive wheels FR and FL does not occur and simultaneous lock of all wheels FR, FL, RR, and RL does not occur either and thus the vehicle speed Vspd is calculated based on the wheel speed of the maximum speed of the wheel speed of all wheels FR, FL, RR, and RL. The reason why the vehicle speed Vspd is thus calculated based on the wheel speed of the maximum speed is that the vehicle speed computed based on the wheel speed of the maximum speed is close to the actual vehicle speed as compared with the vehicle speed computed based on any other wheel speed.

On the other hand, the wheel speed of the drive wheel FR, FL is detected as a very high value in a situation in which wheel spin of the drive wheel FR, FL occurs if ABS control is not in operation. If the vehicle speed Vspd is estimated from the wheel speed of the drive wheel FR, FL, it becomes clearly a too larger value than the actual vehicle speed. Then, if ABS control is not in operation, the wheel speed of the drive wheel FR, FL involving a possibility of wheel spin is excluded and the vehicle speed Vspd is calculated based on the wheel speed of the maximum speed of the wheel speed of the driven wheel RR, RL involving a less possibility of wheel spin.

The vehicle speed Vspd provided as described above is calculated based on the wheel speed of the wheels and thus does not suddenly change even if ABS control is in operation. Thus, if the longitudinal acceleration Gs is computed by differentiating the vehicle speed Vspd, the effect of noise caused by the ABS control is not reflected on the longitudinal acceleration Gs. Therefore, the acceleration in the longitudinal direction of the vehicle (longitudinal acceleration Gs) can be precisely computed without using any acceleration sensor.

As shown in FIG. 3, in the electric power steering apparatus 20 according to the embodiment, if the wheel speed difference $\Delta V$ found by subtracting the previously computed post-regulated wheel speed V1(n-1) from the currently acquired original wheel speed V(n) is larger than the first speed difference $\Delta V_1$, the wheel speed resulting from adding the first speed difference $\Delta V_1$ to the previously computed post-regulated wheel speed V1(n-1) is set as post-regulated wheel speed V1(n). If the wheel speed difference $\Delta V$ is smaller than the second speed difference $\Delta V_2$, the wheel speed resulting from adding the second speed difference $\Delta V_2$ to the previously computed post-regulated wheel speed V1(n-1) is set as post-regulated wheel speed V1(n). If the wheel speed difference $\Delta V$ is not larger than the first speed difference $\Delta V_1$ and is not smaller than the second speed difference $\Delta V_2$, namely, if the wheel speed difference $\Delta V$ is the same as the first speed difference $\Delta V_1$ or is the same as the second speed difference $\Delta V_2$ or is smaller than the first speed difference $\Delta V_1$ and is larger than the second speed difference $\Delta V_2$, the currently acquired original wheel speed V(n) is set intact as the post-regulated wheel speed V1(n). The vehicle speed Vspd is computed based on the post-regulated wheel speed V1(n) set as described above.

Thus, data of the wheel speed such that the wheel speed difference $\Delta V$ becomes larger than the first speed difference $\Delta V_1$ is excluded and data of the wheel speed such that the wheel speed difference $\Delta V$ becomes smaller than the second speed difference $\Delta V_2$ is excluded, whereby data of wheel speed that cannot occur in speed change of the actual vehicle can be excluded. Therefore, the acceleration in the longitudinal direction of the vehicle (longitudinal acceleration Gs) can be precisely computed without using any acceleration sensor.

As shown in FIG. 4, in the electric power steering apparatus 20 according to the embodiment, according to the signals of the wheel speed sensors FRs, FLs, RRs, and RLs and the ABS signal Sabc received via the CAN 50, if ABS control is in operation, the frequency component (cutoff frequency fc2) lower than the frequency component (cutoff frequency fc3) removed when ABS control is not in operation is also removed from the longitudinal acceleration Gs.

During the ABS control, the vehicle surely is braking and thus the fluctuating width of the longitudinal acceleration of the actual vehicle lessens as compared with the case where ABS control is not in operation. Thus, in the embodiment, if ABS control is in operation, the frequency component (cutoff frequency fc2) lower than that when ABS control is not in operation is also removed from the longitudinal acceleration Gs, so that the longitudinal acceleration with more suppressed noise caused by the high frequency component can be calculated. Therefore, the acceleration in the longitudinal direction of the vehicle (longitudinal acceleration Gs) can be precisely computed without using any acceleration sensor.

Further, in the electric power steering apparatus 20 according to the embodiment, the assist motor is driven and controlled for controlling the steering angle of the steering wheel FR, FL based on the signals of the wheel speed sensors FRs, FLs, RRs, and RLs and the ABS signal Sabc received via the CAN 50, so that an electric power steering apparatus enjoying the above-described advantages such that the effect of noise caused by the ABS control is not reflected on the longitudinal acceleration Gs can be realized. Therefore, the electric power steering apparatus that can precisely compute the acceleration in the longitudinal direction of the vehicle (longitudinal acceleration Gs) without using any acceleration sensor can be provided.

The electric power steering apparatus 20 according to the invention may be applied not only to front wheel drive vehicles, but also to rear wheel drive vehicles. In this case, a right rear wheel RR and a left rear wheel RL become drive wheels and a right front wheel FR and a left front wheel FL become driven wheels. Thus, at step S212 in FIG. 4, the vehicle speed Vspd is calculated based on the wheel speed of the maximum speed of the post-regulated wheel speed V1rr and V1rl of the right front wheel FR and the left front wheel FL instead of calculating the vehicle speed Vspd based on the wheel speed of the maximum speed of the post-regulated wheel speed V1rr and V1rl of the right rear wheel RR and the left rear wheel RL.

**Claims**

1.  An acceleration computing apparatus for computing acceleration in a longitudinal direction of a vehicle having an anti-lock controller based on vehicle speed of the vehicle comprising:

    wheel speed acquisition means for acquiring wheel speed in a plurality of drive wheels and a plurality of driven wheels of the vehicle;
    determination means for determining whether or not the anti-lock controller is in operation; and
    vehicle speed computing means for computing the vehicle speed based on the wheel speed of the maximum speed of the wheel speed of the plurality of drive wheels and the plurality of driven wheels if the determination means determines that the anti-lock controller is in operation and computing the vehicle speed based on the wheel speed of the maximum speed of the wheel speed of the plurality of driven wheels if the determination means determines that the anti-lock controller is not in operation.

2.  The acceleration computing apparatus according to claim 1 further comprising:

    wheel speed difference computing means for computing a wheel speed difference by subtracting the previously computed wheel speed from the currently acquired wheel speed; and
    post-regulated wheel speed setting means, if the wheel speed difference is on an acceleration side from a first speed difference, for setting wheel speed resulting from adding the first speed difference to the previously computed wheel speed as post-regulated wheel speed, if the wheel speed difference is on a deceleration side from a second speed difference, for setting wheel speed resulting from adding the second speed difference to the previously computed wheel speed as the post-regulated wheel speed, and if the wheel speed difference is the same as the first speed difference or is the same as the second speed difference or is on the deceleration side from the first speed difference and is on the acceleration side from the second speed difference, for setting the currently acquired wheel speed as the post-regulated wheel speed,

    wherein the vehicle speed computing means computes the vehicle speed based on the post-regulated wheel speed instead of the wheel speed.

3.  The acceleration computing apparatus according to claim 1 or 2 further comprising filter means, if the anti-lock controller is in operation, for removing a frequency component lower than a frequency component removed when the anti-lock controller is not in operation from the acceleration.

4.  An electric power steering apparatus for driving and controlling an assist motor based on a steering state of a steering wheel and controlling a steering angle of a steering wheel by drive power of the assist motor or making up for the drive power,
    wherein the electric power steering apparatus controls the assist motor based on the acceleration computed by the acceleration computing apparatus according to any one of claims 1 to 3.

# FIG. 1

## FIG. 2

```
              ┌─────────┐
              │  START  │
              └─────────┘
                   │
                   ▼                              S101
    ┌──────────────────────────────┐
    │   PERFORM STATE AMOUNT        │
    │   ACQUISITION PROCESSING      │
    └──────────────────────────────┘
                   │
                   ▼                              S200
    ┌──────────────────────────────┐
    │ │ LONGITUDINAL ACCELERATION │ │
    │ │ COMPUTING PROCESSING      │ │
    │ │ ROUTINE                   │ │
    └──────────────────────────────┘
                   │
                   ▼                    S102
              ╱──────────╲
            ╱ IS SUDDEN    ╲      NO
           ╱ BRAKING BEING   ╲──────────────┐
           ╲ PERFORMED?      ╱               │
            ╲ (Gs < G0?)   ╱                 │
              ╲──────────╱                   │
                   │ YES                      │
                   ▼              S103         │
              ╱──────────╲                     │
            ╱              ╲      NO            │
           ╱  |θs| < θ0?    ╲──────────────────┤
           ╲               ╱                    │
              ╲──────────╱                      │
                   │ YES                         │
                   ▼              S104            │
              ╱──────────╲                        │
            ╱  VEHICLE      ╲    NO                │
           ╱  DEFLECTION?    ╲────────────────────┤
           ╲                ╱                      │
              ╲──────────╱                         │
                   │ YES                            │
                   ▼           S105         S106    │
      ┌────────────────────┐  ┌────────────────────┐
      │  DECREASE ASSIST    │  │  PERFORM USUAL     │
      │                     │  │  CONTROL           │
      └────────────────────┘  └────────────────────┘
                   │                    │
                   ▼◄───────────────────┘
              ┌─────────┐
              │   END   │
              └─────────┘
```

11

# FIG. 3

```
                    ┌─────────────┐
                    │    START    │
                    └──────┬──────┘
                           │
                           ▼                    S201
          ┌────────────────────────────────────┐
          │       PERFORM WHEEL SPEED           │
          │     DIFFERENCE CALCULATION          │
          │          PROCESSING                 │
          └────────────────┬───────────────────┘
                           │
                           ▼              S202
                    ◇─────────────◇
              ◇                        ◇   NO
         ◇         ΔV > ΔV₁?               ◇──────┐
              ◇                        ◇          │
                    ◇─────────────◇               │
                           │                      ▼                    S204
                         YES                ◇─────────────◇
                           │          ◇                        ◇   NO
                           │      ◇         ΔV > ΔV₂?              ◇──────┐
                           │          ◇                        ◇         │
                           │                ◇─────────────◇              │
                           │                       │                     │
                           │                     YES                     │
                           │                       │                     │
                           ▼           S203        │          S206       ▼
          ┌─────────────────────────────┐    ┌─────────────────────────────┐
          │ PERFORM POST-REGULATED WHEEL │    │ PERFORM POST-REGULATED WHEEL │
          │  SPEED SETTING PROCESSING    │    │  SPEED SETTING PROCESSING    │
          │  (V1(n) = V1(n-1) + ΔV₁)     │    │       (V1(n) = V(n))         │
          └──────────────┬──────────────┘    └──────────────┬──────────────┘
                         │                 S205              │
                         │      ┌─────────────────────────────┐
                         │      │ PERFORM POST-REGULATED WHEEL │
                         │      │  SPEED SETTING PROCESSING    │
                         │      │  (V1(n) = V1(n-1) + ΔV₂)     │
                         │      └──────────────┬──────────────┘
                         │                     │                        │
                         ▼◄────────────────────┴────────────────────────┘
                       ┌───┐
                       │ 1 │
                       └───┘
```

The flowchart shows:

- **START**
- **S201**: PERFORM WHEEL SPEED DIFFERENCE CALCULATION PROCESSING
- **S202**: $\Delta V > \Delta V_1$?
  - YES → **S203**: PERFORM POST-REGULATED WHEEL SPEED SETTING PROCESSING $(V1(n) = V1(n-1) + \Delta V_1)$
  - NO → **S204**: $\Delta V > \Delta V_2$?
    - YES → **S205**: PERFORM POST-REGULATED WHEEL SPEED SETTING PROCESSING $(V1(n) = V1(n-1) + \Delta V_2)$
    - NO → **S206**: PERFORM POST-REGULATED WHEEL SPEED SETTING PROCESSING $(V1(n) = V(n))$
- **1**

# FIG. 4

```
                    ( 1 )
                      │
                      ▼
                   ╱ S210 ╲
              ╱                 ╲        NO
         ╱   IS ABS CONTROL BEING  ╲ ─────────────┐
         ╲      PERFORMED?         ╱               │
              ╲                 ╱                  │
                   ╲         ╱                     │
                      │ YES                        │
          ┌───── S211 ▼ ────────┐      ┌───── S212 ▼ ────────┐
          │ CALCULATE VEHICLE SPEED │   │ CALCULATE VEHICLE SPEED BASED │
          │ BASED ON WHEEL SPEED OF │   │    ON WHEEL SPEED OF          │
          │     ALL WHEELS          │   │     DRIVEN WHEELS             │
          └────────────┬───────────┘   └──────────────┬──────────────┘
                       │                               │
                       │◄──────────────────────────────┘
                       ▼
          ┌───── S213 ──────────┐
          │ PERFORM LOW-PASS FILTER │
          │      PROCESSING         │
          │ (CUTOFF FREQUENCY fc1)  │
          └────────────┬───────────┘
                       ▼
          ┌───── S214 ──────────┐
          │ PERFORM ACCELERATION    │
          │ COMPUTING PROCESSING    │
          └────────────┬───────────┘
                       ▼
                   ╱ S215 ╲
              ╱                 ╲        NO
         ╱   IS ABS CONTROL BEING  ╲ ─────────────┐
         ╲      PERFORMED?         ╱               │
              ╲                 ╱                  │
                   ╲         ╱                     │
                      │ YES                        │
          ┌───── S216 ▼ ────────┐      ┌───── S217 ▼ ────────┐
          │ PERFORM LOW-PASS FILTER │   │ PERFORM LOW-PASS FILTER │
          │      PROCESSING         │   │      PROCESSING         │
          │ (CUTOFF FREQUENCY fc2)  │   │ (CUTOFF FREQUENCY fc3)  │
          └────────────┬───────────┘   │        RETURN           │
                       │               └──────────────┬──────────┘
                       │◄─────────────────────────────┘
                       ▼
                  ( RETURN )
```

# FIG. 5

## FIG. 6

EP 2 098 438 A1

*FIG. 7*

FLAG

1

0

ABS

V₁

VEHICLE SPEED [km/h]

120
100
80
60
40
20
0

TIME

0  1  2  3  4  5  6

*FIG. 8*

## INTERNATIONAL SEARCH REPORT

| International application No. |
| --- |
| PCT/JP2007/074825 |

A.  CLASSIFICATION OF SUBJECT MATTER
*B62D6/00*(2006.01)i, *B60R16/02*(2006.01)i, *B60T8/171*(2006.01)i, *B60W30/00*
(2006.01)i, *B60W40/10*(2006.01)i, *B62D5/04*(2006.01)i, *G01P15/16*(2006.01)i,
*B62D101/00*(2006.01)n, *B62D103/00*(2006.01)n, *B62D113/00*(2006.01)n,
According to International Patent Classification (IPC) or to both national classification and IPC

B.  FIELDS SEARCHED

Minimum documentation searched (classification system followed by classification symbols)
B62D6/00, B60R16/02, B60T8/171, B60W30/00, B60W40/10, B62D5/04, G01P15/16,
B62D101/00, B62D103/00, B62D113/00, B62D119/00

Documentation searched other than minimum documentation to the extent that such documents are included in the fields searched
Jitsuyo Shinan Koho          1922-1996     Jitsuyo Shinan Toroku Koho   1996-2008
Kokai Jitsuyo Shinan Koho    1971-2008     Toroku Jitsuyo Shinan Koho   1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y | JP 6-107207 A  (Mazda Motor Corp.),<br>19 April, 1994 (19.04.94),<br>Par. No. [0023]<br>& KR 9711357 B | 1-4 |
| Y | JP 2001-301485 A  (Toyota Motor Corp.),<br>31 October, 2001 (31.10.01),<br>Par. No. [0041]<br>(Family: none) | 1-4 |
| Y | JP 2001-151139 A  (Toyoda Machine Works, Ltd.),<br>05 June, 2001 (05.06.01),<br>Par. Nos. [0015] to [0019]; Fig. 5<br>(Family: none) | 2 |

☒   Further documents are listed in the continuation of Box C.          ☐   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>10 March, 2008 (10.03.08) | Date of mailing of the international search report<br>15 April, 2008 (15.04.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

## INTERNATIONAL SEARCH REPORT

| | International application No. |
|---|---|
| | PCT/JP2007/074825 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 5-24553 A  (Toyota Motor Corp.),<br>02 February, 1993 (02.02.93),<br>Par. Nos. [0017] to [0020]; Fig. 6<br>(Family: none) | 2 |
| Y | JP 7-179169 A  (Nippondenso Co., Ltd.),<br>18 July, 1995 (18.07.95),<br>Par. Nos. [0019] to [0022], [0025]<br>(Family: none) | 3 |
| A | JP 10-264843 A  (TRW SSJ Kabushiki Kaisha),<br>06 October, 1998 (06.10.98),<br>Fig. 3<br>(Family: none) | 1-4 |
| A | JP 2000-177556 A  (Toyota Motor Corp.),<br>27 June, 2000 (27.06.00),<br>Fig. 4<br>& US 6305760 B1          & EP 1013523 A2 | 1-4 |

Form PCT/ISA/210 (continuation of second sheet) (April 2007)

**INTERNATIONAL SEARCH REPORT**

International application No.

PCT/JP2007/074825

Continuation of A. CLASSIFICATION OF SUBJECT MATTER
  (International Patent Classification (IPC))

*B62D119/00*(2006.01)n

  (According to International Patent Classification (IPC) or to both national
  classification and IPC)

Form PCT/ISA/210 (extra sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10104259 A